(19) Europäisches Patentamt
European Patent Office
Office européen des brevets

(11) Publication number: **0 446 747 B1**

(12) **EUROPEAN PATENT SPECIFICATION**

(45) Date of publication of patent specification: **20.12.95** (51) Int. Cl.6: **C08F 14/06**, C08F 2/20

(21) Application number: **91103196.1**

(22) Date of filing: **04.03.91**

(54) **Vinyl chloride polymerization process and PVC obtained with said process**

(30) Priority: **07.03.90 IT 1958890**

(43) Date of publication of application:
**18.09.91 Bulletin 91/38**

(45) Publication of the grant of the patent:
**20.12.95 Bulletin 95/51**

(84) Designated Contracting States:
**BE DE ES FR GB IT NL**

(56) References cited:
**FR-A- 2 596 764**

(73) Proprietor: **3V LUXEMBOURG S.A.**
**Rue Antoine Jans, 10**
**Luxembourg (LU)**

(72) Inventor: **Borrini, Giancarlo**
**Via Maraini 15**
**CH-6900 Lugano (CH)**

(74) Representative: **Faggioni, Marco, Dr. Ing. et al**
**Fumero Studio Consulenza Brevetti**
**Franz-Joseph-Strasse 38**
**D-80801 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

## Description

The present invention concerns a process for the suspension polymerization of vinyl chloride, either pure or mixed with other monomers, to obtain PVC resins particularly suited for use as insulating materials in the electrical field.

The invention also concerns the PVC resin obtained with said process, which resin distinguishes itself for the substantial absence of closed cells inside the particles forming the same.

As known, vinyl chloride suspension polymers are produced using, as suspension system, a mixture of different suspending agents.

Said mixture of suspending agents can for example be formed of one or more colloids, of a ionogenic or non-ionogenic wetting agent, and of a suspending agent which influences the ionic strength and improves the final characteristics of the polymer.

As protection colloids, use is made of gelatine, alginates, tragacanth gum, polyethylene oxides, polyvinyl alcohols with different degrees of hydrolysis, cellulose ethers.

As ionogenic and non-ionogenic emulsifying and wetting agents, use is made of alkyl sulphonic and alkyl sulphonated acids, alkyl naphthalene sulphonates, salts of fatty acids, alkyl-aryl-polyglycol ethers, polyacrylates, and so on.

It is known to use vinyl acetate/vinyl alcohol copolymers - more simply, polyvinyl alcohols - as suspending agents for PVC, and their effect on the morphological characteristics of PVC resins is equally known. Examples of processes of this type are described in US-B-2,812,318 and in DE-A-1.171.158. The proportion of suspending agents used in these known processes varies from 0.03 to 1% by weight, on the weight of the monomer or mixture of monomers employed.

In PVC production processes using the known type polyvinyl alcohols as suspending agents, it has however not been possible to obtain up to date PVC resins not showing, in fairly high percentages, the phenomenon of occluded or closed porosity, which influences negatively the elimination of the residual monomer retained in the cells during the conventional production processes. Said residual monomer therefore remains in the final resin and is thus gradually transferred into the environment, causing great health problems to the workers dealing with the production and conversion of said PVC.

The object of the present invention is a process for the suspension polymerization of vinyl chloride, either pure or mixed with other monomers, to produce PVC resins substantially exempt from closed cells.

Another object of the invention is a vinyl chloride polymerization process allowing to produce PVC resins with a low content of ions of alkaline or earthy-alkaline metals and with a very low electrical conductivity, which make them particularly suited for use as insulating materials in the electrical field.

According to the present invention, these and other objects are reached with a process for the suspension polymerization of vinyl chloride, either pure or mixed with other monomers making use, as a polymerization adjuvant, of a primary suspending agent, characterized in that said primary suspending agent is a vinyl acetate/vinyl alcohol copolymer of the type in which:

a) the alcohol groups and the acetate groups are distributed in blocks in the polymeric chains;

b) the average degree of polymerization is from 150 to 1.500;

c) the molar degree of hydrolysis is from 60% to 80%; and

d) the molecular weight distribution includes from 5% to 10% of oligomers with a degree of polymerization from of 5 to 30.

The polyvinyl alcohol used as primary suspending agent in the polymerization process of the present invention, and the relative production process, form the object of a Patent application being simultaneously filed by the Applicant under No.

The present invention will anyhow be described more in detail hereinafter, also with reference to some examples of vinyl chloride polymerization which are however not meant to limit its scope.

The object of the polymerization process according to the present invention is to allow producing PVC resins - the PVC being pure or copolymerized with other monomers - substantially exempt from closed porosity. Closed porosity consists of cavities formed into the PVC particles and not connected with the exterior; the monomer retained therein during the polymerization process then finds it very difficult to rapidly permeate through such cavities outside the particle at the end of the process. Closed porosity, and the consequent structural heterogeneity of the PVC resin, also leads to an overall deterioration of the general characteristics of said resin.

Closed porosity is determined by measuring the inherent density of the PVC particles (Bolakirkaya-Shtarkman), while open or accessible porosity is determined by mercury intrusion, using a porosimeter produced by the firm Carlo Erba of Milan, and determining the porosity on the resin as such and on the $>100\mu$ and $< 100\mu$ fractions.

2

During studies carried out on the polymerization of PVC with different suspending agents, the Applicant has conceived a new process which, by using a particular polyvinyl alcohol as primary suspending agent and carrying out the polymerization reaction at a temperature between 50° and 80°C, has surprisingly allowed to produce a PVC resin wherein the phenomenon of closed porosity is practically absent and which thus has an improved structural homogeneity. This new characteristic of PVC resins, together with a very uniform distribution of their porosity, allows to reach high release speeds of the residual monomer contained in the cells of each PVC particle, so that, at the end of production, the PVC is practically exempt therefrom.

The polyvinyl alcohol used, in the present invention, as primary suspending agent of the polymerization process, is a polyvinyl alcohol in which the alcohol groups and the acetate groups are distributed in blocks in the polymeric chains, the average degree of polymerization is between 150 and 1500 and the molar degree of hydrolysis is between 60% and 80%, and preferably between 65% and 75%, and between 5% and 10% of oligomers with a degree of polymerization between 5 and 30 are present in the distribution of the molecular weights. Preferably, the degree of polymerization is between 200 and 1000, the average length of the blocks of the alcohol groups is between 8 and 12 units, and the average length of the blocks of the acetate groups is between 3 and 5 units. Furthermore, the polyvinyl alcohol used in the process of the present invention advantageously contains at least 0.20% by weight of carbonyl radicals.

The PVC resins obtained with the process of the present invention differ from the similar resins existing on the market also for an improved thermal stability, for the absence of electrostatic charges, and for a higher percentage of polyvinyl alcohol grafted onto the PVC particles during polymerization. Finally, thanks to the low content of ions of alkaline and earthy-alkaline metals in the suspending agents used in the process of the present invention, the PVC resins produced therewith have a high resistivity which make them particularly suited for use as insulating materials in the electrical field.

EXAMPLES

Polymerization of vinyl chloride

Examples 1-16

The following components are charged into a reaction vessel having a volume of 15 cubic meters and equipped with a Pfaudler stirrer:

100 parts of vinyl chloride
120 parts of demineralized water
0.045 parts of bis(4-terz.butyl-cyclohexyl)peroxidicarbonate
x ppm of a polyvinyl alcohol.

The chemical-physical properties of the different samples of polyvinyl alcohols used in the Examples as suspending agents are reported in Table I. The proportion x in which said suspending agents are used in the polymerization process is reported in Table II. Table I reports the following parameters:

- average degree of polymerization
- content of oligomers
- viscosity at 4%
- molar degree of hydrolysis
- average number of units of the vinyl alcohol blocks
- average number of units of the vinyl acetate blocks
- average dimension of the particle
- concentration in water
- clouding temperature
- surface tension
- ions of alkaline or earthy-alkaline metals
- toxic solvents: methanol and methanol acetate.

Table 1 also reports the data of comparison samples a) and b), consisting of polyvinyl alcohols available on the market. In particular, sample a) is sold by the British firm REVERTEX under the commercial name of ALCOTEX 72.5, while sample b) is sold by the German firm WACKER under the commercial name of POLYVIOL 05/290.

The polymerization is carried out at 54°C, at a stirring speed of 120 r.p.m., in the absence of oxygen. The reaction is stopped when a 90% conversion is reached, to which there corresponds an Δ P of 4.5 kg/cm$^2$. The reaction product is stripped under vacuum at 90°C for at least 100 minutes, dried, and analyzed for what concerns the following properties:

- K value of the PVC, measured according to DIN 53726
- closed porosity
- open porosity
- average diameter of the particle
- granulometry
- apparent density
- residual vinyl chloride monomer
- volume resistivity
- VAc/VOH copolymer grafted on PVC
- thermal stability Ca-Zn
- presence/absence of electrostatic charges.

The results of the tests are reported in Table II. Examples 1 to 4 refer to polyvinyl alcohols of known technique, while Examples 5 to 16 refer to the polyvinyl alcohols of the present invention, or to mixtures thereof.

Examples 17-19

The aforedescribed polymerization process is repeated changing the polymerization temperature, which is now raised to 70°C. Examples 17 and 18 use the same polyvinyl alcohols as the previous Examples 1 and 9, while Example 19 uses the mixture of copolymers used in Example 13, in different proportions. The results of the tests carried out on the PVC thus obtained are also reported in Table II. Example 17 refers to a VAc/VOH copolymer of known technique, while Examples 18 and 19 refer to the copolymers of the present invention, or to mixtures thereof.

<u>TABLE I</u>

| Test N° | | VAc/VOH | | | | | | | | | | | |
|---|---|---|---|---|---|---|---|---|---|---|---|---|---|
| | Average degree of polymerization | Oligomers % | Viscosity at 4% | Molar degree of hydrolys. % | N units of VOH blocks | N units of VAc blocks | Dimension particles Å | Concentration in $H_2O$ % | Clouding temperature °C | Surface tension dyne/cm | Ions ppm | MeOH % | MeOAc % |
| a | | | 5 | 71 | 7,9 | 2,9 | | | 29 | 37,6 | 3000 | | |
| b | | | 5 | 70,5 | 7,3 | 3 | | | 30 | 39,1 | 2750 | | |
| c | 950 | 5 | | 66,5 | 8,4 | 3,5 | 100÷300 | 29 | 15 | 35,9 | 490 | < 1 | Abs. |
| d | 810 | 10 | | 66,5 | 8.2 | 3,4 | 100÷300 | 31 | 14,5 | 34,3 | 500 | < 1 | Abs. |
| e | 350 | 7 | | 66 | 8,9 | 3,3 | 100÷300 | 44 | 15 | 35,1 | 750 | < 1 | Abs. |
| f | 350 | 7 | | 73,5 | 11 | 3,1 | 100÷300 | 47 | 23,5 | 34 | 700 | < 1 | Abs. |

TABLE II

| N° Test | VAc/VOH | | K value PVC | Porosity | | | | Average Ø of particles μ |
|---|---|---|---|---|---|---|---|---|
| | Type | ppm | | Closed % | Open cc/gr | | | |
| | | | | | as such | >100 μ | <100 μ | |
| 1 | a | 1500 | 70 | 25 | 0,267 | 0,240 | 0,290 | 179 |
| 2 | a | 1200 | 70 | 45 | 0,263 | 0,240 | 0,280 | 253 |
| 3 | b | 1500 | 70 | 15 | 0,257 | 0,220 | 0,280 | 161 |
| 4 | b | 1200 | 70 | 40 | 0,251 | 0,200 | 0,290 | 195 |
| 5 | c | 1500 | 70 | 2 | 0,320 | 0,320 | 0,320 | 110 |
| 6 | c | 1200 | 70 | 1 | 0,305 | 0,300 | 0,310 | 125 |
| 7 | d | 1500 | 70 | < 1 | 0,338 | 0,330 | 0,330 | 104 |
| 8 | d | 1200 | 70 | < 1 | 0,313 | 0,310 | 0,320 | 118 |
| 9 | e | 1500 | 70 | < 1 | 0,342 | 0,340 | 0,340 | 121 |
| 10 | e | 1200 | 70 | < 1 | 0,320 | 0,310 | 0,330 | 134 |
| 11 | f | 1500 | 70 | 5 | 0,298 | 0,290 | 0,300 | 117 |
| 12 | f | 1200 | 70 | 7 | 0,289 | 0,280 | 0,300 | 159 |
| 13 | c + e | 1000 + 500 | 70 | < 1 | 0,331 | 0,330 | 0,330 | 120 |
| 14 | c + f | 1000 + 500 | 70 | 3 | 0,310 | 0,310 | 0,310 | 115 |
| 15 | c | 2000 | 70 | < 1 | 0,340 | 0,340 | 0,340 | 107 |
| 16 | c | 2500 | 70 | < 1 | 0,395 | 0,390 | 0,400 | 106 |
| 17 | a | 1500 | 57 | – | 0,130 | 0,090 | 0,180 | 195 |
| 18 | e | 1500 | 57 | – | 0,230 | 0,240 | 0,220 | 122 |
| 19 | c + e | 400 + 1100 | 57 | – | 0,210 | 0,200 | 0,220 | 146 |

TABLE II (cont.)

| N° Test | GRANULOMETRY >250μ % | >200μ % | >160μ % | >125μ % | >100μ % | >63μ % | <63μ % | Apparent density g/l | Residual VCM ppm | Volume resistiv. ohm cm. 10^13 | VAc/VOH grafted % | Stability CaZn min. | Electro-static charges |
|---|---|---|---|---|---|---|---|---|---|---|---|---|---|
| 1 | 2,7 | 22,6 | 38,7 | 27,6 | 7,2 | 1,1 | 0,1 | 470 | 18 | 0,1 | 80 | 75 | present |
| 2 | 70,3 | 16,2 | 5,8 | 3,1 | 1,3 | 2,1 | 1,2 | 505 | 8 | 0,3 | 82 | 70 | " |
| 3 | 4,8 | 14,6 | 21,4 | 28,9 | 21,8 | 8,4 | 0,1 | 498 | 5 | 0,1 | 80 | 75 | " |
| 4 | 11,3 | 26,1 | 40,4 | 15,4 | 4,3 | 2,4 | 0,1 | 492 | 10 | 0,2 | 80 | 70 | " |
| 5 | - | - | 0,3 | 17,3 | 52,7 | 29,0 | 0,3 | 498 | < 0,1 | 6,0 | 98 | 85 | absent |
| 6 | - | 0,2 | 5,3 | 33,9 | 47,5 | 12,8 | 0,3 | 500 | < 0,1 | 12,0 | 100 | 80 | " |
| 7 | - | 0,1 | 0,9 | 10,5 | 46,0 | 41,2 | 1,3 | 487 | < 0,1 | 5,0 | 100 | 85 | " |
| 8 | - | 0,1 | 1,6 | 22,6 | 54,7 | 20,7 | 0,3 | 495 | < 0,1 | 11,0 | 100 | 80 | " |
| 9 | - | 0,6 | 4,3 | 26,8 | 50,8 | 17,3 | 0,2 | 485 | < 0,1 | 14,0 | 100 | 85 | " |
| 10 | 0,1 | 1 | 13,7 | 40,6 | 34,8 | 9,7 | 0,1 | 480 | < 0,1 | 18,0 | 100 | 80 | " |
| 11 | - | 0,1 | 3,3 | 31,2 | 42,9 | 21,5 | 1,0 | 515 | < 0,1 | 8,0 | 97 | 85 | " |
| 12 | 0,1 | 11,5 | 34,9 | 31,2 | 17,4 | 4,8 | 0,1 | 519 | < 0,1 | 12,0 | 98 | 80 | " |
| 13 | - | 0,3 | 5,2 | 27,9 | 44,0 | 21,3 | 0,7 | 490 | < 0,1 | 13,0 | 100 | 90 | " |
| 14 | - | 0,2 | 2,3 | 25,2 | 46,2 | 25,1 | 1,0 | 507 | < 0,1 | 10,0 | 100 | 90 | " |
| 15 | - | - | 0,7 | 16,2 | 44,2 | 38,4 | 0,6 | 477 | < 0,1 | 4,5 | 95 | 100 | " |
| 16 | - | - | 0,2 | 14,8 | 47,0 | 34,8 | 3,2 | 462 | < 0,1 | 3,0 | 93 | 110 | " |
| 17 | 27,4 | 19,5 | 14,0 | 13,8 | 14,9 | 9,4 | 1,0 | 545 | 12 | - | 80 | 55 | present |
| 18 | - | 0,5 | 3,5 | 32,6 | 46,0 | 17,0 | 0,4 | 552 | < 0,1 | - | 98 | 70 | absent |
| 19 | 0,1 | 4,3 | 27,2 | 36,3 | 22,5 | 9,5 | 0,2 | 566 | < 0,1 | - | 100 | 70 | " |

## Claims

1. Process for the suspension polymerization of vinyl chloride, either pure or mixed with other monomers making use, as a polymerization adjuvant, of a primary suspending agent, characterized in that said primary suspending agent is a vinyl acetate/vinyl alcohol copolymer of the type in which:

a) the alcohol groups and the acetate groups are distributed in blocks in the polymeric chains;

b) the average degree of polymerization is from 150 to 1.500;

c) the molar degree of hydrolysis is from 60% to 80%; and

d) the molecular weight distribution includes from 5% to 10% of oligomers with a degree of polymerization of from 5 to 30.

2. Process as in claim 1), wherein said polyvinyl alcohol contains at least 0.20% by weight of carbonyl radicals.

3. Process as in claim 1), wherein the molar degree of hydrolysis of said polyvinyl alcohol is from 65% to 75%.

4. Process as in claim 1), wherein the polymerization temperature is from 50° to 80°C.

**Patentansprüche**

1. Verfahren zur Suspensionspolymerisation von Vinylchlorid, entweder rein oder mit anderen Monomeren vermischt, unter Verwendung eines primären Suspensionsmittel als Polymerisationsadjuvans, dadurch gekennzeichnet, daß das primäre Suspensionemittel ein Vinylazetat/Vinylalkohol-Copolymer von der Art ist, bei der

a) die Alkoholgruppen und die Acetatgruppen in Blöcken in den Polymerketten verteilt sind;

b) der durchschnittliche Polymerisationsgrad 150 bis 1.500 beträgt;

c) der molare Hydrolysegrad 60 % bis 80 % beträgt; und

d) die Molekülgewichtsverteilung 5 % bis 10 % Oligomere mit einem Polymerisationsgrad von 5 bis 30 beinhaltet.

2. Verfahren nach Anspruch 1, wobei der Polyvenylalkohol wenigstens 0,20 Gewichtsprozent Carbonylreste aufweist.

3. Verfahren nach Anspruch 1, wobei der molare Hydrolysegrad des Polyvinylalkohols 65 % bis 75 % beträgt.

4. Verfahren nach Anspruch 1, wobei die Polymerisationstemperatur 50° bis 80°C beträgt.

**Revendications**

1. Procédé pour la polymérisation en suspension de chlorure de vinyle, soit sous forme pure ou mélangée à d'autres monomères, utilisant en tant qu'adjuvant de polymérisation un agent de suspension primaire, caractérisé en ce que ledit agent de suspension primaire est un copolymère acétate de vinyle/alcool vinylique, tel que :

a) les groupes hydroxyle et les groupes acétate sont distribués de façon séquencée dans les chaînes de polymère;

b) le degré moyen de polymérisation est compris entre 150 et 1500;

c) le pourcentage d'hydrolyse par mole est compris entre 60 % et 80 %; et

d) la distribution des poids moléculaires est telle que 5 à 10% d'oligomères présentent un degré de polymérisation compris entre 5 et 30.

2. Procédé selon la revendication 1, dans lequel ledit poly(alcool vinylique) contient au moins 0,20 % en poids de groupes carbonyle.

3. Procédé selon la revendication 1, dans lequel le pourcentage d'hydrolyse par mole dudit poly(alcool vinylique) est compris entre 65 et 75 %.

4. Procédé selon la revendication 1, dans lequel la température de polymérisation est comprise entre 50 et 80° C.